# EUROPEAN PATENT SPECIFICATION

(11) **EP 1 077 831 B1**
(45) Date of publication and mention of the grant of the patent: **03.07.2002**
(21) Application number: 99917369.3
(22) Date of filing: 07.04.1999
(51) Int. Cl.: B60N 2/44

(54) **TWIN FRAME SEAT ASSEMBLY**
DOPPELRAHMEN-SITZAUFBAU
ENSEMBLE SIEGE A DOUBLE CHASSIS

(30) Priority: 12.05.1998 US 76545; 12.05.1998 US 76544
(43) Date of publication of application: 28.02.2001
(73) Proprietor: Johnson Controls Technology Company, Plymouth, Michigan 48170 (US)
(72) Inventor: AEBISCHER, Silvio, San Luis Obispo, CA 93401 (US); BUSH, Neil, J., Pinckney, MI 48169 (US); RINGOLD, Ted, W., Hudsonville, MI 49426 (US); DELLINGER, Thomas, J., Zeeland, MI 49464 (US); BURMEISTER, Eric, E., Dearborn Heights, MI 48125 (US); CAMPBELL, Danny, E., Holland, MI 49424 (US)
(74) Representative: Solf, Alexander, Dr.
(86) International application number: US9907716
(87) International publication number: WO9958364

(56) References cited:
- EP-A- 0 308 374
- EP-A- 0 372 338
- DE-C- 19 627 546
- DE-U- 29 718 241
- FR-A- 1 380 470
- US-A- 4 836 609

## Description

### BACKGROUND AND SUMMARY OF THE INVENTION

The present invention relates to a vehicle seat assembly constructed to facilitate recycling of the seat components after use and in particular, to a twin frame structure for a vehicle seat assembly with a minimum number of fasteners to facilitate both the assembly as well as the disassembly of the seat for reclaiming the components of the seat assembly for recycling purposes.

To reduce the negative environmental impact of motor vehicles, a greater emphasis is being placed on the recyclability of vehicle components as well as increasing the use of recycled materials in motor vehicles. In addition, an increasing number of regulations are being passed which mandate the recycled content in motor vehicles and mandate that vehicle manufacturers accept the return of a vehicle at the end of its useful life for dismantling of the vehicle and reuse or recycling of an increasingly higher percentage of the vehicle's components.

It is an object of the present invention to provide a seat structure that is designed to iroprove the ability to dismantle the seat assembly to reclaim or reuse the seat components. To provide more environmentally friendly vehicles, it is necessary to reduce the number of materials, components, fasteners, etc, in the seat assembly to reduce the quantity of components and the number of different materials to separate at the end of the product life cycle. The Heuliez reference (FR 002430211), for example, discloses a seat according the preamble of claim 1 for public transport consisting of sections with a matching shape which lock together. As described by the reference, an outer trough-shaped piece forms the back-rest and seat and has seat and back space rest cushions fitted into them, over which a covering is stretched. There are, however, no or few "multi-tasking" pieces in the Heuliez reference that serve multiple functions. Each piece has its own fastener system. By reducing the total number of material types, components and fasteners, dismantling of the seat assembly is made easier and therefore less costly. The less it costs to dismantle the seat assembly, the greater the economic incentive to do so.

Reuse of seat components without alteration is the best form of recycling since it eliminates energy and manufacturing costs. If a component cannot be reused in its original form, the next best form of recycling is to reclaim it. This introduces the component to a process that alters its form, making it suitable as a raw material, such as a regrinding plastic or melting metals. This is a desirable practice in that it reuses all of the material in a new component. Ideally, none of the material ends up in the landfill or incinerator.

If a seat or seat component cannot be reused or reclaimed, it is ultimately shredded. Afterwards, ferrous metals are pulled out by magnet and other materials are separated by gravity with the remainder being sent to a landfill or incinerated. With the current seat designs, the majority of the seat is sent to the shredder with the rest of the vehicle interior and ends up in a landfill as automotive shredder residue.

The seat assembly of the present invention makes significant steps toward improving the recyclability by reducing the number of components in the seat assembly. This directly facilitates the dismantling of the seat after its useful life. In addition, the number of different types of materials is also reduced to aid in the dismantling and ultimate dispersal of the individual components. The materials used in the seat assembly are preferably chosen so that materials can be easily reused or reclaimed as opposed to materials that must be shredded.

The seat assembly of the present invention is a typical configuration a generally horizontal seat bottom and a generally upright seat back extending upwardly at the rear of the seat bottom. A seat bottom assembly includes a frame having two parts, an upper and lower part, both of which are preferably U-shaped or rectangular. Other frame configurations may be used as desired by the seat designer. A suspension panel is attached to the lower part of the frame and spans between the frame side and cross members. A resilient pad is placed upon the suspension member and is then covered with a trim cover. The upper part of the frame is then attached to the lower part of the frame, sandwiching the periphery of the suspension panel and the trim cover therebetween to mount the suspension panel, pad and trim cover to the frame. The frame lower part and upper part are each formed as a single component and include inter-locking features that join the upper and lower frame members together. At the rear end of the two parts of the seat bottom frame, a pivot pin is used to attach the frame parts together.

The seat back is formed of a similar twin frame structure having a frame with a front part and a rear part which sandwiches the seat back suspension panel, resilient pad and trim cover therebetween. At its lower end the seat back frame is joined together by the same pivot pin joining the seat bottom frame parts. In addition, the recliner mechanism operates through the pivot pin as well such that the pivot pin also serves to mount the seat back to the seat bottom. The seat bottom frame is attached to slide tracks which are attached to a vehicle body enabling the seat bottom and seat back to be adjusted fore and aft within the motor vehicle.

The twin frame is a multi-tasking part in that it includes its own fastening features to attach the twin frame parts to one another and also to retain the suspension panel and trim cover to the frame. Thus no separate fastening components are required. The same is true of the twin frame parts in the seat back. Ideally, the frame components, if they have not been damaged during the useful life of the vehicle, i.e. involved in vehicle collision, would be reused in their original form in a new seat assembly. In a preferred embodiment of the invention, the resilient pad is made of 100% polyethylene terephthalate (PET) fiber which can be easily reclaimed as opposed to currently used polyurethane which cannot be reclaimed. The trim cover can also be made of PETcloth. Neither the trim cover nor the pad have embedded wires or Velcro fasteners that make it difficult to separate the components by material types. The trim cover is not glued to the pad either which prohibits easy removal of the trim cover. The suspension panels can be molded plastic panels made of virgin or recycled materials and can be recycled after use.

Further objects, features and advantages of the invention will become apparent from a consideration of the following description and the appended claims when taken in connection with the accompanying drawings.

### BRIEF DESCRIPTION OF THE DRAWINGS

FIG. 1 is a perspective view of a vehicle seat assembly of the present invention utilizing the twin frame components in the seat bottom and seat back;
FIG. 2 is a perspective view of the lower part of the seat bottom frame;
FIG. 3 is an exploded perspective view of the seat bottom showing the individual seat bottom components;
FIG. 4 is a perspective view of a partially assembled seat bottom;
FIG. 5 is a perspective view of the seat assembly showing the seat bottom nearly fully assembled while the seat back is shown in an exploded, unassembled position illustrating the components of the seat back;
FIG. 6 is a perspective view of an exemplary recliner mechanism; and
FIG. 7 is a perspective view of the frame and trim cover components of an alternative embodiment of the twin frame seat assembly of the present invention.

### DETAILED DESCRIPTION OF THE PREFERRED EMBODIMENT

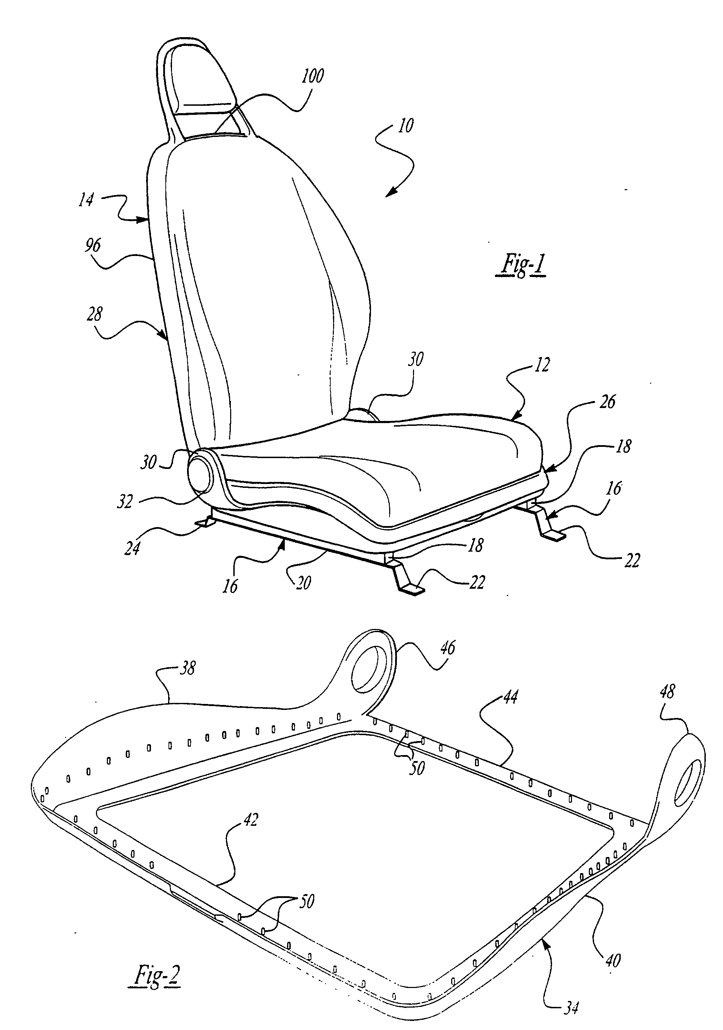

The vehicle seat assembly of the present invention as shown in FIG. 1 and designated generally at 10. The seat assembly 10 has a generally horizontal seat 10 bottom 12 and a seat back 16 extending generally upwardly at the rear end of the seat bottom. Beneath the seat bottom 12 are a pair of left and right slide tracks 16, one on each side of the seat assembly. The slide tracks each include a sliding rail 18 and a fixed rail 20 which includes front and rear feet 22, 24 for mounting the seat assembly into a motor vehicle. The slide tracks 16 provide for fore and aft adjustment of the 1 5 position of the seat bottom and seat back within a motor vehicle.

The seat bottom 12 has a frame 26 which, in the embodiment shown in FIG. 1, is an exposed frame about the periphery of the seat bottom. Likewise, the seat back includes a seat back frame 28 which is also exposed and extends about the periphery of the seat back 16. The seat back frame 28 is attached at its lower end to the rear end of the seat back frame. A knob 32 is provided to actuate a recliner mechanism at the coupling of the seat back frame to the seat bottom frame which is described below in greater detail.

The seat bottom and seat back each include a seating portion mounted to the frame which includes the upholstery or "soft parts" of the seat assembly engaged by a seat occupant. In the seat assembly 10 the seating portion includes a suspension panel, a resilient pad and a trim cover as shown and described in great detail in the following figures. With reference to FIGS. 2-5, the construction of the seat bottom 12 is shown. The frame 26 of the seat bottom includes a lower part 34 and an upper part 36. The lower part 34 is shown in FIG. 2 as being generally rectangular having a pair of side members 38 and 40 and front and rear cross members 42, 44. At the rear end of the bottom frame, large mounting bosses 46 and 48 are formed for multiple purposes as described below. The lower frame 34 also includes a plurality of upstanding pins which are to locate and retain the suspension panel and a trim cover as described below.

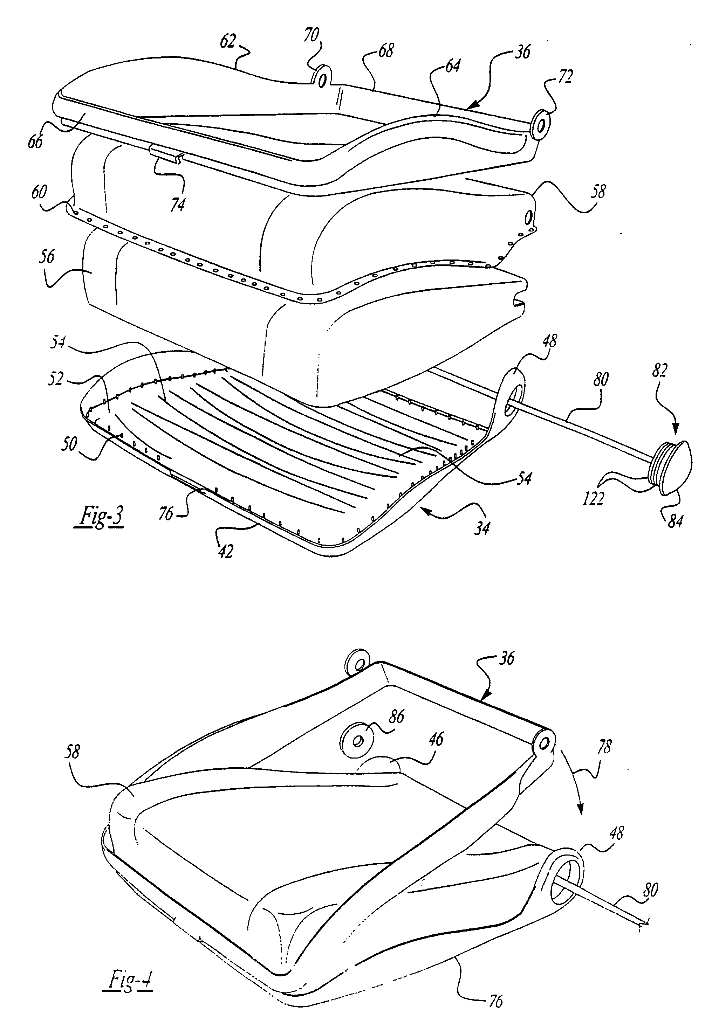

As shown in FIG. 3, a suspension panel 52 is placed on the lower frame 34. Thesuspension panel has a plurality of apertures about its periphery which receive the upstanding pins 50 of the frame lower part. The suspension panel 52 is a semi-rigid formed panel made of any of a variety of materials including molded plastics, thermoformed fibrous bats, cast or stamped metal, etc. Resin impregnated fibrous bats are described in greater detail in corresponding U.S. patent application serial no.09/076,544 filed the same day as this application (attorney docket number 1056A-000301) and incorporated herein by reference. The suspension panel 52 is formed with a plurality of corrugations or ridges 54 to enable the panel to provide a flexible suspension to the seat pad. A stretchable elastic fabric panel could be used for the suspension as well.

A resilient pad 56 is placed on top of the suspension panel 52. The pad 56 is preferably made of bonded PET fibers to provide a pad that is more readily recycled than commonly used polyurethane foam pads. However, the pad can be made of polyurethane or rubberized hair or other materials.

A trim cover is placed over the pad 56. The trim cover has a number of apertures 60 about its periphery which also receive the locating pins 50 of the frame lower part. The trim cover 58 is shaped to conform to the pad 56 and provide a smooth, preferably wrinkle free, surface. The trim cover is preferably made of woven PET fibers to provide ease in recycling of the trim cover material. However, any fabric, vinyl, leather, etc. materals can be used for the trim cover if desired. The seat pad 56 is sandwiched between the suspension panel and the trim cover.

The pins hold the trim cover and suspension panel in place on the seat frame. These pins are only exemplary of various retaining features that could be used. The frame parts can be shaped such that the upper part forms a cam that pulls the trim cover tight as the upper part is brought down in to engagement with the lower part.

The seat bottom frame upper part 36 is then placed on top of the frame lower part 34 and around the pad and trim cover. The upper frame 36, like the lower frame, has a pair of side members 62 and 64 and a pair of cross members, front cross member 66 and rear cross member 68. The upper part, like the lower part, includes bosses 70 and 72 at its rear end which will be described in greater detail below.

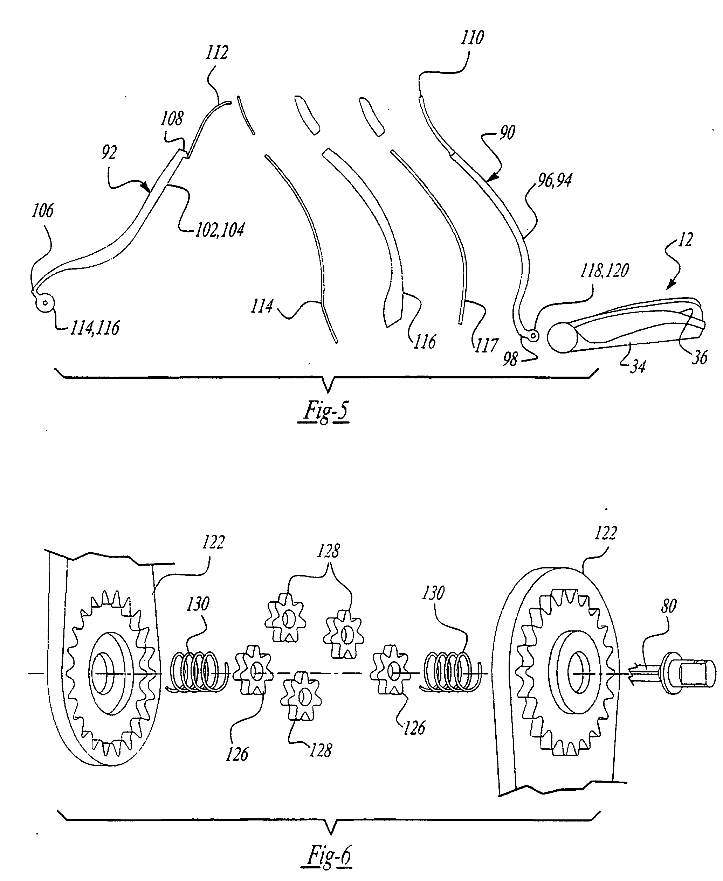

The upper frame part and the lower frame part have interlocking features to enable the frame parts to couple to one another. In the embodiment shown in FIGS. 1-5 the interlocking features are an extending tab 74 on the front cross member of the frame upper part and a slot 76 in the front cross member 42 of the frame lower part which receives the tab 74. The frame upper part 36 is shown in a partially assembled position in FIG. 4 in which the front cross member is lowered and the tab 74 of the front cross member is inserted into the slot 76 in the frame lower part. The rear end of the frame upper part is then rotated. This brings the bosses 70 and 72 of the frame upper part into alignment with the bosses 46 and 48 of the frame lower part where the center apertures of the bosses are aligned with one another. In the assembled position of the frame parts, the periphery of the suspension panel 52 and the periphery of the trim cover 60 are trapped between the lower and upper parts of the frame to mount the suspension panel, pad and trim cover upon the frame.

The upper and lower frame parts are held together at the rear end by a pivot pin 80 which is inserted through the mounting bosses of the upper and lower parts and which extends transversely across the rear end of the seat bottom. A recliner mechanism 82 with an operating knob 84 is attached to one end of the pivot pin. The recliner mechanism is described in greater detail below. A retainer 86 is attached to the other end of a pivot pin to hold the pivot pin in place.

The slide tracks 16 shown in FIG. 1 are attached to the bottom of the frame lower part 34.

With reference to FIG. 5, the structure of the seat back 14 is shown in conjunction with the seat bottom. The seat back 14 is constructed in a similar fashionas the seat bottom. The seat back frame 28 includes a frame front part 90 and a frame rear part 92. The frame front part includes left and right side members 94, 96, a bottom cross member 98 and an upper cross member 100, best shown in FIG. 1. The frame rear part also includes left and right side members 102, 104, a lower cross member 106 and an upper cross member 108. Extending upwardly from the upper cross members of the back frame front and rear parts is a headrest frame 110 and 112. A suspension panel 114, pad 116 and trim cover 117, are attached to the frame rear and front parts and trapped therebetween in the same manner as in the seat bottom 12. The upper cross members 100 and 108 of the frame front and rear parts, respectively, have interlocking features such as a tab and a slot which couple to one another to hold the frame parts together at their upper ends. The frame parts are assembled together in such a manner that the head rest section 112 of the rear frame part forms the front portion of the headrest frame as assembled. The headrest section of the rear frame part is inserted into the headrest portion 110 of the front part from the rear and the two frame parts are rotated together about a transverse axis generally located at the upper cross members 100 and 108 of the frame parts. Mounting bosses 114 and 116 are provided at the lower end of the frame rear part which are aligned with mounting bosses 118 and 120 at the lower end of the frame front part 90. The pivot pin 80 is inserted through the bosses of the seat back frame to hold the two pans of the seat back frame together. The pivot pin 80 is inserted through both parts of both the seat bottom frame and the seat back frame concurrently to both attach the seat back frame parts and seat bottom frame pans together as well as to attach the seat back to the seat bottom. Thus, the pivot pin 80 performs multiple functions in the seat assembly reducing the number of components in the seat assembly.

The frame parts of the seat back and seat bottom frames are made of any material that will provide the necessary strength, keeping in mind the desirability to use material that can enable the parts to be reused w ithout altering their form in a subsequent seat assembly. This may require the use of additional material to provide a greater strength and durability to the parts than would be necessary if they were to be used only once. However, the extra investment required to initially produce the parts can be recouped by future savings when these parts are reused. In the event the parts are not reused in their identical form, they are made of a material that can easily be reclaimed by using the material to manufacture new parts. Materials which can be readily reclaimed include most metals, including iron, aluminum and preferably, magnesium due to its high strength and low weight. However, other materials can be used for the frame, such as high strength plastics or composites plastics or fiber reinforced plastic materials. Any material that provides the necessary strength can be used with the preferred materials being those that enable the parts to be reused or at a minimum to be reclaimed and manufactured into new components.

The two part seat bottom frame and the two part back seat back frame is referred to as a twin frame structure since each frame is made of two parts. The parts have integral interlocking features such as the tab 74 and slot 76 in the seat bottom frame parts that enable the parts to be joined together without the need for separate fasteners such as bolts or rivets. This results in a reduction in the number of components in the seat assembly and also enables the frame parts to be readily separated by a disassembler without the need to cut away rivets or unthread threaded fasteners. As mentioned above, the pivot pin 80 serves multiple functions of retaining the seat bottom frame parts together, retaining the seat back frame parts together and coupling the seat back to the seat bottom. This further reduces the number of components in the seat assembly, leaving the retainer 86 at one end of the pivot pin as the only component in the seat assembly that can be classified solely as a fastener, performing only the one function. By removing the retainer 86 and withdrawing the pivot pin 80, the individual components of the seat assembly essentially fall apart.

As an alternative to a separate suspension panel mounted to the frame, the seat bottom lower frame part may include an integrally molded or cast metal pan extending across the sat bottom. This wouid likely not be flexible to provide a suspension but

As another alternative, the seat bottom upper frame part could be made not as a load carrying frame part but as a retainer to mount the seating portion to the lower frame part. Additionally, the upper frame part may attach to the lower frame part solely by interlocking features in the frame parts and not be retained by the pivot pin 80. In such a case, the upper frame part would not include the mounting boss for the pivot pin.

Various types of recliner mechanisms can be used, one possible mechanism utilizes a pair of ring gears 122, one of which is designed to couple non-rotatably with the seat back frame while the other is coupled non-rotatably with the seat back frame. The gears can couple to the seat back and seat bottom frames by a bayonet-type locking mechanism requiring no separate fasteners. Such a recliner mechanism is shown in FIG. 6. Between the ring gears 122 is a planetary gear configuration 124, having a pair of sun gears 126 and multiple planet gears 128. By providing the ring gears 122 with one ring gear having a different number of teeth than the other ring gear, rotation of the pivot pin 80, which is coupled to the sun gears 126, results in rotation of one ring gear relative to the other causing rotation of the seat back relative to the seat cushion about a transverse axis. Springs 130 bias the beveled sun gears tightly against the planet gears to avoid free play in the recliner. As an alternative construction, instead of having ring gears 122 which couple to the seat back and set bottom frames, one or both of the ring gears themselves may be integrally formed as part of the mounting bosses of the seat back and seat bottom frames. In this case, a planetary set would be inserted between the ring gears during the coupling of the seat back and seat bottom to one another.

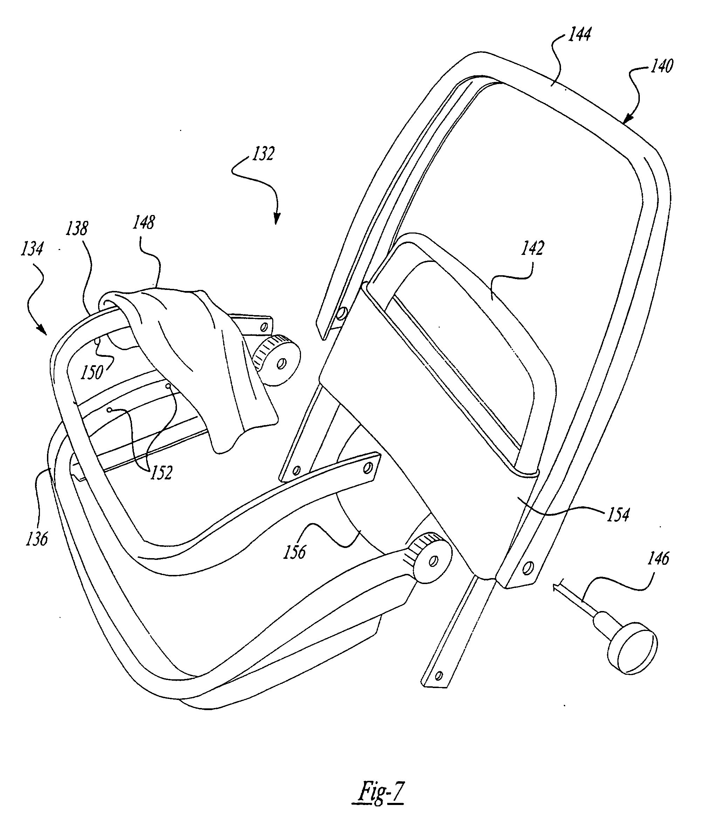

In many seat assemblies, a recliner mechanism on one side of the seat assembly is adequate. Where a two sided recliner is needed, such as a structured seat carrying a shoulder belt, the pivot pin 80 can be used to transmit the rotary motion to operate the recliner -on the side of the seat opposite the recliner knob. If only one recliner is used and the pivot pin 80 is not needed as a transverse cross member, the pin 80 may be replaced by two shorter pivot pins, one on each side of the seat assembly, to retain the frame parts together and to attach the back frame to the bottom frame. With reference to FIG. 7, an alternative embodiment of the twin frame seat assembly is shown. In this embodiment, the seat bottom frame 134 has a lower piece136 and an upper piece 138. Likewise, the seat back frame 140 has a front part 142 and rear part 144. Both the seat bottom frame and seat back frame are generally U-shaped having three sides, as opposed to rectangular four sided frame parts of FIGS.1-4. In the case of the seat bottom, the two parts each have opposite side members and a front cross member but no rear cross member. With the seat back frame, there are upright side members on each side and an upper cross member but no lower cross member. The frame parts each have mounting bosse ssimilar to that shown in connection with the first embodiment of FIGS. 1-4 for receiving a pivot pin 146. In this embodiment, the pivot pin 146 also serves as a transverse cross member at the rear of the seat bottom and lower end of the seat back. Inward deflection of the frame side members can be prevented by providing the pivot pin 146 with an annular grove and placing a snap ring or other fastener in the grove immediately inboard of the frame parts on each side.

The seat assembly 132 also has other differences from that shown in the seat assembly 10. The seat assembly 132 does not include a suspension panel and resilient pad. Rather, trim cover 148 is made of a stretchable fabric that is attached to the seat bottom frame and spans between the two side members of the seat bottom frame. The stretchability of the trim cover 148 provides the cushioning effect for the seat occupant.

The frame part 138 is provided with nominally projecting pins 150 that can used to locate the trim cover 148. The pins 150 also seat into hole apertures 152 in the lower frame part 136. In a addition to locating the two frame parts to one another, the pins 150 can snap engage into the apertures 152 to mount the frame upper part 138 onto the lower part 136, trapping the trim cover therebetween.

The seat back trim cover 154 is shown as sleeve that fits over the front frame part 142 and is stretched tightly thereby. To provide additional lumbar support, a resilient pad 156 can be placed inside the trim cover 154 in the lumbar region. The pad 156 can be made of PET fibers or other recyclable material or it can be made of polyurethane foam if desired.

The various features of seat assemblies lot 132 can be combined with one another. For example, seat assembly 10 can be made with a three sided frame as shown in seat assembly 132.

The twin frame structure of the present invention is beneficial for the purposes of ease of assembly and ease of disassembly. By providing a seat that is easy to disassemble, there is a greater economic incentive for the seat to be dismantled and its components reused or reclaimed. However, the structure shown and claimed can be used in a seat in which the individual components are not readily reused or reclaimed. For example, while a PET fiber pad is preferred for the seat pad, a generally non reusable or reclaimable polyurethane pad can be used as well. Likewise, the trim cover can be adhesively bonded to the seat pad if desired even though this makes separation of the trim cover and seat pad impractical.

It is to be understood that the invention is not limited to the exact construction illustrated and described above, but that various changes may be made if not thereby departing from the scope of the invention as defined in the following claims.

## Claims

1. A vehicle seat assembly (10) comprising a generally horizontal seat bottom (12) and a seat back (14) extending generally upwardly at a rear end of the seat bottom, one of the seat bottom and seat back having a frame (26) and a seating portion for engagement with a seat occupant, **characterized by**:
the frame having a first part (34) and a second part (36), the first and second parts of the frame being joined together with a part of the seating portion being trapped between the first and second parts of the frame to mount the seating portion upon the frame, and the vehicle seat assembly having a retaining mechanism (80) positioned at the rear end of the seat bottom separate from the frame parts thernselves and operable to couple the first and second parts of the frame and operable to couple the seat bottom and the seat back.

2. The vehicle seat assembly of claim 1 **characterized by** the seating portion including a suspension panel (52), a pad (56) and a trim cover (58).

3. The vehicle seat assembly of claim 2 **characterized by** the suspension panel and the trim cover surrounding the pad, and peripheral edges of the suspension panel and the trim cover being retained between the first and second parts of the frame to mount the seating portion upon the frame.

4. The vehicle seat assembly of claim 1 **characterized by** the seating portion including a flexible sheet material (58) spanning between opposite sides of the frame.

5. The vehicle seat assembly of claim 1 **characterized by** the sealing portion including a resilient pad (56) for cushioning.

6. The vehicle seat assembly of claim 1 **characterized by** the frame having spaced apart side members (62 and 64), and the seating portion spanning between the spaced apart frame side members.

7. The vehicle seat assembly of claim 6 **characterized by** the frame further comprising a cross member (66) connecting two side members together at one end to form a generally U-shaped frame.

8. The vehicle seat assembly of claim 6 **characterized by** the frame further comprising cross members (66 and 68) connecting the side members together at each end of the side members to form a generally rectangular shaped frame.

9. The vehicle seat assembly of claim 6 **characterized by** the seating portion including a suspension panel (52) spanning between the spaced apart side members.

10. The vehicle seat assembly of claim 9 **characterized by** the suspension panel being integrally formed with one of the first and second parts of the frame as a single piece.

11. The vehicle seat assembly of claim 1 **characterized by** the frame first part being integrally formed as a single piece.

12. The vehicle seat assembly of claim 1 **characterized by** the frame second part being integrally formed as a single piece.

13. The vehicle seat assembly of claim 1 **characterized by** the frame first and second parts being each integrally formed as single pieces.

14. The vehicle seat assembly of claim 1 **characterized by** the retaining mechanism including a pivot pin (80) extending transversely across the vehicle seat assembly.

15. The vehicle seat assembly of claim 14 **characterized by** a recliner means (82) associated with the pivot pin and coupled to each of the seat back and seat bottom to rotatably adjust the position of the seat back relative to the seat bottom and to hold the seat back in place relative to the seat bottom.

16. The vehicle seat assembly of claim 1 **characterized by** the frame having side members (38 and 40) extending along opposite sides of the frame which rerminate at one end of the frame in mounting bosses (46 and 48) on each side having aligned apertures therein for receiving a pivot pin (80).

17. The vehicle seat assembly of claim 1 **characterized by** the frame first part being a load carrying member to carry the seating load.

18. The vehicle seat assembly vehicle seat assembly of claim 1 **characterized by** the frame first and second parts each having a pair of spaced apart side members (38 and 40) and a front cross member (42).

19. The seat assembly of claim 18 **characterized by** the frame first and second parts being integrally formed with means (74 and 76) at the front cross members for interlocking the frame first and second parts to one another.

20. The seat assembly of claim 1 **characterized by** the seat back having a back frame (28) and a back seating portion for engagement with a seat occupant, the back frame having a first part (90) and a second part (92) each having a pair of spaced apart side members (94 and 96) and an upper cross member (100), the first and second parts of the back frame being joined together with a part of the back seating portion being trapped between the first and second parts of the back frame to mount the seating portion upon the frame.

## Patentansprüche

1. Fahrzeugsitzaufbau (10), aufweisend ein allgemein horizontales Sitzteil (12) und eine Sitzlehne (14), die sich ausgehend von einem hinteren Ende des Sitzteils allgemein in Aufwärtsrichtung erstreckt, wobei entweder das Sitzteil oder die Sitzlehne einen Rahmen (26) und einen Sitzabschnitt zum Eingriff mit einem Sitznutzer aufweist, **dadurch gekennzeichnet, dass**
der Rahmen einen ersten Teil (34) und einen zweiten Teil (36) aufweist, wobei die ersten und zweiten Teile des Rahmens durch einen Teil des Sitzabschnitts miteinander verbunden sind, der zwischen den ersten und zweiten Teilen des Rahmens eingeschlossen ist, um den Sitzabschnitt auf dem Rahmen anzubringen, und wobei der Fahrzeugsitzaufbau einen Rückhaltemechanismus (80) aufweist, der am hinteren Ende des Sitzteils getrennt von den Rahmenteilen selber positioniert und betätigbar ist, um die ersten und zweiten Teile des Rahmens zu verbinden, und um das Sitzteil mit der Sitzlehne zu verbinden.

2. Fahrzeugsitzaufbau nach Anspruch 1, **dadurch gekennzeichnet, dass** der Sitzabschnitt eine Tragplatte (52), ein Polster (56) und einen Überzug (58) aufweist.

3. Sitzaufbau nach Anspruch 2, **dadurch gekennzeichnet, dass** die Tragplatte und der Überzug das Polster umschließen, und dass die Umfangsränder der Tragplatte und des Überzugs zwischen dem ersten und zweiten Teilen des Rahmens rückgehalten sind, um den Sitzabschnitt auf dem Rahmen anzubringen.

4. Sitzaufbau nach Anspruch 1, **dadurch gekennzeichnet, dass** der Sitzabschnitt ein flexibles Kaschiermaterial (58) umfasst, das zwischen gegenüberliegenden Seiten des Rahmens gespannt verläuft.

5. Sitzaufbau nach Anspruch 1, **dadurch gekennzeichnet, dass** der Sitzabschnitt ein elastisches Polster (56) zur Polsterung aufweist.

6. Sitzaufbau nach Anspruch 1, **dadurch gekennzeichnet, dass** der Rahmen von einander beabstandete Seitenelemente (62 und 64) aufweist, und dass der Sitzabschnitt zwischen den voneinander beabstandeten Rahmenseitenelementen gespannt verläuft.

7. Sitzaufbau nach Anspruch 6, **dadurch gekennzeichnet, dass** der Rahmen außerdem ein Querelement (66) aufweist, das zwei Seitenelemente an einem Ende miteinander verbindet, um einen allgemein U-förmigen Rahmen zu bilden.

8. Sitzaufbau nach Anspruch 6, **dadurch gekennzeichnet, dass** der Rahmen außerdem Querelemente (66 und 68) aufweist, die die Seitenelemente an jedem Ende der Seitenelemente miteinander verbinden, um einen allgemein rechteckigen Rahmen zu bilden.

9. Sitzaufbau nach Anspruch 6, **dadurch gekennzeichnet, dass** der Sitzabschnitt eine Tragplatte (52) aufweist, die zwischen den voneinander beabstandeten Seitenelementen sich erstreckt.

10. Sitzaufbau nach Anspruch 9, **dadurch gekennzeichnet, dass** die Tragplatte mit entweder dem ersten oder dem zweiten Teil des Rahmens einstückig integral gebildet ist.

11. Sitzaufbau nach Anspruch 1, **dadurch gekennzeichnet, dass** der erste Rahmenteil integral als einstückiges Teil gebildet ist.

12. Sitzaufbau nach Anspruch 1, **dadurch gekennzeichnet, dass** der zweite Rahmenteil integral als einstückiges Teil gebildet ist.

13. Sitzaufbau nach Anspruch 1, **dadurch gekennzeichnet, dass** die ersten und zweiten Rahmenteile integral einstückig gebildet sind.

14. Sitzaufbau nach Anspruch 1, **dadurch gekennzeichnet, dass** der Rückhaltemechanismus einen Schwenkzapfen (80) aufweist, der sich über dem Fahrzeugsitzaufbau in Querrichtung erstreckt.

15. Sitzaufbau nach Anspruch 14, **gekennzeichnet durch** eine dem Schwenkzapfen zugeordnete und mit sowohl der Sitzlehne wie dem Sitzteil verbundene Verstelleinrichtung (82), um die Position der Sitzlehne relativ zum Sitzteil drehbar einzustellen, und die Sitzlehne relativ zum Sitzteil in Position zu halten.

16. Sitzaufbau nach Anspruch 1, **dadurch gekennzeichnet, dass** der Rahmen Seitenelemente (38 und 40) aufweist, die sich entlang gegenüberliegenden Seiten des Rahmens erstrecken, die an einem Ende des Rahmens in Halterungsvorsprüngen (46 und 48) auf jeder Seiten enden, die zur Aufnahme eines Schwenkzapfens (80) mit diesem fluchtende Durchbrüche aufweisen.

17. Sitzaufbau nach Anspruch 1, **dadurch gekennzeichnet, dass** der erste Rahmenteil ein Lasttrageelement ist, um die Sitzlast zu tragen.

18. Sitzaufbau nach Anspruch 1, **dadurch gekennzeichnet, dass** die ersten und zweiten Rahmenteile jeweils ein Paar von voneinander beabstandeten Seitenelementen (38 und 40) und ein vorderes Querelement (42) aufweisen.

19. Sitzaufbau nach Anspruch 18, **dadurch gekennzeichnet, dass** die ersten und zweiten Rahmenteile integral mit einer Einrichtung (74 und 76) an den vorderen Querelementen gebildet sind, um die ersten und zweiten Rahmenteile in bezug aufeinander zu sperren.

20. Sitzaufbau nach Anspruch 1, **dadurch gekennzeichnet, dass** die Sitzlehne einen Sitzrahmen (28) und einen Sitzlehnenabschnitt zum Eingriff mit einem Sitznutzer aufweist, wobei der Sitzrahmen einen ersten Teil (90) und einen zweiten Teil (92) aufweist, die jeweils ein Paar von voneinander beabstandeten Seitenelementen (94 und 96) und ein oberes Querelement (100) aufweisen, wobei die ersten und zweiten Sitzlehnenteile mit einem Teil des Sitzlehnenabschnitts miteinander verbunden sind, der zwischen den ersten und zweiten Teilen der Sitzlehne eingeschlossen ist, um den Sitzabschnitt auf dem Rahmen anzubringen.

## Revendications

1. Ensemble (10) de siège de véhicule, comprenant un siège globalement horizontal (12) et un dossier (14) s'étendant globalement vers le haut à une extrémité arrière du siège, le siège ou le dossier comportant un bâti (26) et une portion sur laquelle on s'assied, destinée à recevoir un occupant du siège, **caractérisé en ce que** :
le bâti comporte une première partie (34) et une seconde partie (36), les première et seconde parties du cadre étant réunies l'une à l'autre par une partie de la portion sur laquelle on s'assied, qui est retenue entre la première et la seconde parties du cadre pour supporter sur le bâti la partie sur laquelle on s'assied, et l'ensemble de siège de véhicule ayant un mécanisme de retenue (80) placé à l'extrémité arrière du siège de manière séparée des parties elles-mêmes du bâti et servant à accoupler la première et la seconde partie du bâti et servant à accoupler le siège et le dossier.

2. Ensemble de siège de véhicule selon la revendication 1,
**caractérisé en ce que** la portion sur laquelle on s'assied comporte un panneau de suspension (52), un coussin (56) et un habillage (58).

3. Ensemble de siège de véhicule selon la revendication 2,
**caractérisé en ce que** le panneau de suspension et l'habillage entourent le coussin, et les bords périphériques du panneau de suspension et de l'habillage sont retenus entre la première et la seconde parties du bâti afin de monter sur le bâti la portion sur laquelle on s'assied.

4. Ensemble de siège de véhicule selon la revendication 1,
**caractérisé en ce que** la portion sur laquelle on s'assied comporte une matière en feuille souple (58) s'étendant entre les côtés opposés du bâti.

5. Ensemble de siège de véhicule selon la revendication 1,
**caractérisé en ce que** la portion sur laquelle on s'assied comporte un coussin élastique de rembourrage (56).

6. Ensemble de siège de véhicule selon la revendication 1,
**caractérisé en ce que** le bâti comporte des éléments latéraux (62 et 64) espacés l'un de l'autre, la portion sur laquelle on s'assied s'étendant entre les éléments latéraux du bâti espacés l'un de l'autre.

7. Ensemble de siège de véhicule selon la revendication 6,
**caractérisé en ce que** le bâti comporte en outre un élément transversal (66) reliant deux éléments latéraux l'un à l'autre en une extrémité pour former un bâti globalement en U.

8. Ensemble de siège de véhicule selon la revendication 6,
**caractérisé en ce que** le bâti comprend en outre des éléments transversaux (66 et 68) reliant l'un à l'autre les éléments latéraux en chaque extrémité des éléments latéraux pour former un bâti de forme globalement rectangulaire.

9. Ensemble de siège de véhicule selon la revendication 6,
**caractérisé en ce que** la portion sur laquelle on s'assied comporte un panneau de suspension (52) s'étendant entre les éléments latéraux espacés l'un de l'autre.

10. Ensemble de siège de véhicule selon la revendication 6,
**caractérisé en ce que** le panneau de suspension fait corps avec l'une des première et seconde parties du bâti.

11. Ensemble de siège de véhicule selon la revendication 1,
**caractérisé en ce que** la première partie du bâti est réalisée d'une seule pièce.

12. Ensemble de siège de véhicule selon la revendication 1,
**caractérisé en ce que** la seconde partie du bâti est réalisée d'une seule pièce.

13. Ensemble de siège de véhicule selon la revendication 1,
**caractérisé en ce que** la première et la seconde parties du bâti sont réalisées chacune d'une seule pièce.

14. Ensemble de siège de véhicule selon la revendication 1,
**caractérisé en ce que** le mécanisme de retenue comporte un pivot (80) s'étendant transversalement d'un côté à l'autre de l'ensemble de siège de véhicule.

15. Ensemble de siège de véhicule selon la revendication 14,
**caractérisé par** un moyen d'inclinaison (82) associé au pivot et accouplé avec chacun des dossiers et siège pour régler de manière rotative la position du dossier par rapport au siège et pour maintenir le dossier en place par rapport au siège.

16. Ensemble de siège de véhicule selon la revendication 1,
**caractérisé en ce que** le bâti comporte des éléments latéraux (38 et 40) s'étendant sur des côtés opposés du bâti qui se terminent, en une extrémité du bâti, par des bossages de montage (46 et 48) situés de chaque côté, comportant des ouvertures alignées pour recevoir un pivot (80).

17. Ensemble de siège de véhicule selon la revendication 1,
**caractérisé en ce que** la première partie du cadre est un élément de support de charge servant à supporter la charge exercée par l'occupant assis.

18. Ensemble de siège de véhicule selon la revendication 1,
**caractérisé en ce que** la première et la seconde parties du cadre comportent chacune une paire d'éléments latéraux (38 et 40) espacés l'un de l'autre et un élément transversal avant (42).

19. Ensemble de siège de véhicule selon la revendication 18,
**caractérisé en ce que** la première et la seconde parties du cadre font corps avec des moyens (74 et 76) situés sur les éléments transversaux avant pour assujettir la première et la seconde parties du cadre l'une à l'autre.

20. Ensemble de siège de véhicule selon la revendication 1,
**caractérisé en ce que** le dossier a un bâti (28) de dossier et une portion d'appui de dossier destinée à recevoir un occupant du siège, le bâti de dossier ayant une première partie (90) et une seconde partie (92) munies chacune d'une paire d'éléments latéraux (94 et 96) espacés l'un de l'autre et d'un élément transversal supérieur (100), la première et la seconde parties du bâti de dossier étant réunies l'une à l'autre par une partie de la portion d'appui de dossier prise entre la première et la seconde parties du bâti de dossier afin de monter sur le bâti la portion sur laquelle on s'assied.
